# EUROPÄISCHE PATENTSCHRIFT

(11) **EP 2 834 483 B1**
(45) Veröffentlichungstag und Bekanntmachung des Hinweises auf die Patenterteilung: **13.03.2019**
(21) Anmeldenummer: 13700334.9
(22) Anmeldetag: 17.01.2013
(51) Int. Cl.: F01L 13/00, F02D 13/06

(54) **MECHANISCH STEUERBARE VENTILTRIEBANORDNUNG, BRENNKRAFTMASCHINE SOWIE EIN VERFAHREN ZUM BETREIBEN EINER BRENNKRAFTMASCHINE**
MECHANICALLY ACTUATED VALVE DRIVE, ENGINE AND ENGINE DRIVING METHOD
ENSEMBLE DE COMMANDE DE SOUPAPE MECANIQUE, MOTEUR, ET PROCÉDÉ DE COMMAND D'UN TEL MOTEUR

(30) Priorität: 05.04.2012 DE 102012006983
(43) Veröffentlichungstag der Anmeldung: 11.02.2015
(73) Patentinhaber: Kolbenschmidt Pierburg Innovations GmbH, 74172 Neckarsulm (DE)
(72) Erfinder: NOWAK, Martin, 51379 Leverkusen (DE); GRIMM, Karsten, 52064 Aachen (DE); BREUER, Michael, 52152 Simmerath (DE); MOORMANN, Stefan, 41564 Kaarst (DE); ROTHGANG, Stefan, 47495 Rheinberg (DE)
(74) Vertreter: Patentanwälte ter Smitten Eberlein-Van Hoof Rütten Partnerschaftsgesellschaft mbB
(86) Internationale Anmeldenummer: PCT/EP2013/050839
(87) Internationale Veröffentlichungsnummer: WO 2013/149737

(56) Entgegenhaltungen:
- EP-A2- 1 760 278
- EP-A2- 1 760 278
- DE-A1- 10 323 665
- DE-A1-102006 033 559
- DE-A1-102006 055 800

## Beschreibung

Die Erfindung betrifft eine mechanisch steuerbare Ventiltriebanordnung für eine Brennkraftmaschine mit mindestens zwei Zylindern, die jeweils mindestens ein Gaseinlassventil und mindestens ein Gasauslassventil aufweisen, wobei mindestens eine Übertragungsanordnung vorgesehen ist, derart, dass zumindest jedem Gaseinlassventil eine Zwischenhebelanordnung und eine Schwenkhebelanordnung zugeordnet ist, wobei ein Zwischenhebel der Zwischenhebelanordnung eine Arbeitskurve zur Wirkverbindung mit einem Schwenkhebel der Schwenkhebelanordnung aufweist, wobei der Zwischenhebel in Wirkverbindung mit einer Umfangskontur einer Nockenwelle steht und wobei die Zwischenhebelanordnung ein Angriffsorgan aufweist, das mit einer Steuerkontur einer Ventilhubverstelleinrichtung in Wirkverbindung steht, derart, dass verschiedene Ventilhubpositionen einstellbar sind und eine Nullhubeinstellung der Gaseinlassventile mindestens eines Abschalt-Zylinders möglich ist, wobei die Ventilhubverstelleinrichtung eine Steuerwelle aufweist, auf der die Steuerkonturen angeordnet sind, wobei alle Steuerkonturen für einen Leerlaufbereich und einen Volllastbereich im Wesentlichen gleich ausgebildet sind, wobei die Steuerkonturen für einen Teillastbereich der Gaseinlassventile des Abschaltzylinders ein unterschiedlich ausgeführtes Teilstück gegenüber der Steuerkontur für einen Teillastbereich der Gaseinlassventile der übrigen Zylinder aufweisen, wobei ein direktes Verhältnis zwischen dem Radius r der jeweiligen Steuerkontur und der Hubhöhe h des Gaseinlassventils besteht.

Des Weiteren betrifft die Erfindung eine Brennkraftmaschine mit einer derartigen mechanisch steuerbaren Ventiltriebanordnung sowie ein Verfahren zum Betreiben einer derartigen Brennkraftmaschine.

Derartige Ventiltriebanordnungen sind hinlänglich bekannt. Sie dienen insbesondere dazu, mittels der Ventilhubhöhe und damit dem Füllgrad der Zylinder der Brennkraftmaschine den Verbrennungsprozess den jeweiligen Lastanforderungen anzupassen und dementsprechend für eine möglichst effiziente und damit auch schadstoffarme Verbrennung zu sorgen. Darüber hinaus ist es bekannt, um in bestimmten Lastbereichen, insbesondere dem Teillastbereich, eine gewisse Anzahl von Zylindern komplett abzuschalten, um beispielsweise bei einer Vierzylinder-Brennkraftmaschine die Brennkraftmaschine lediglich mit zwei Zylindern zu betreiben. Auch hier steht die Effizienz und Emissionsoptimierung des Verbrennungsprozesses im Vordergrund. Hinsichtlich der Zylinderabschaltung sind zahlreiche Techniken bekannt. Hierzu zählen zum Beispiel schaltbare Tastenstößel, Schlepphebel mit Lost Motion Funktion sowie Schiebenocken mit einer Nullhubkontur. Problematisch bei diesen technischen Konzepten ist, dass die Aktivierung bzw. Deaktivierung der entsprechenden Ventile des abzuschaltenden Zylinders vorgenommen werden muss, wenn die entsprechenden Ventile geschlossen sind, also zwischen zwei Arbeitsspielen. Hierdurch ergibt sich für die Brennkraftmaschine ein deutlicher Lastsprung, der gedämpft werden muss. Auf diese Weise gehen die theoretischen Wirkungsgrade und Vorteile zum Teil wieder verloren.

Die DE 10 2006 033 559 A1 beschreibt dagegen einen mechanisch steuerbaren Ventiltrieb mit zwei unabhängig voneinander antreibbaren Ventilhubverstelleinrichtungen, wodurch die Ventilhubverstelleinrichtungen auch zur Zylinderabschaltung genutzt werden können. Es sollte deutlich sein, dass das Vorsehen von unabhängig voneinander zu betreibenden Ventilhubverstelleinrichtungen einen erhöhten Montage- und auch Kostenaufwand bedingt.

Aus der EP 1 760 278 A2 ist ein gattungsgemäßer variabler ventiltrieb bekannt, dessen Steuerwelle für verschiedene Zylinder unterschiedliche Steuerkonturen aufweist, derart, dass bestimmte Einlassventile von Zylindern einer Brennkraftmaschine mit unterschiedlicher Hubhöhe betrieben werden können, bis hin zur Stilllegung von bestimmten Zylindern. Auch hier können sich die vorgenannten deutlichen Lastsprünge mit den entsprechenden Nachteilen ergeben.

Aufgabe der Erfindung ist es daher, einen mechanisch steuerbaren Ventiltrieb sowie eine Brennkraftmaschine und ein Verfahren zum Betreiben der Brennkraftmaschine zu schaffen, die die oben genannten Nachteile vermeidet.

Diese Aufgabe wird durch den erfindungsgemäßen mechanisch steuerbaren Ventiltrieb dadurch gelöst, dass der Hubhöhe h der Gaseinlassventile eines Zylinders ein mittlerer Druck p im Zylinder zugeordnet ist, wobei der Radius r₁ der ersten Steuerkontur derart in Abhängigkeit vom Radius r₂ der zweiten Steuerkontur gewählt ist, dass im Teillastbereich der Brennkraftmaschine der Druckverlauf p_{ges} über alle Zylinder der Brennkraftmaschine monoton ansteigend über den Verstellwinkel der Steuerwelle verläuft. Auf diese Weise ist es möglich, beispielsweise bei in Reihe geschalteten Zylindern, eine Zylinderabschaltung mit nur einer Stellvorrichtung durchzuführen, wobei problematische und wirkungsgradschädliche Lastsprünge vermieden werden.

Hierbei ist es für eine einfache und kostengünstige Montage besonders vorteilhaft, wenn die Steuerkonturen innerhalb eines Grundkreises der Steuerwelle angeordnet sind.

Hierbei kann es insbesondere vorteilhaft sein, wenn das Teilstück der den Abschaltzylindern zugeordneten Steuerkontur gegenüber dem entsprechenden Teilstück der den übrigen Zylindern zugeordneten Steuerkontur zurückversetzt angeordnet ist.

Eine besonders kompakte mechanisch steuerbare Ventiltriebanordnung wird dadurch geschaffen, dass zwei Zwischenhebel über eine Verbindungswelle an dem der Arbeitskurve entgegengesetzten Ende miteinander verbunden sind, wobei eine erste Rolle für die Kraftübertragung der Nockenwelle vorgesehen ist und eine zweite Rolle zwischen den Zwischenhebeln zur Führung in einer Kulisse vorgesehen ist.

Bei einer besonders vorteilhaften Ausführungsform sind im Teillastbereich eine Hälfte der Zylinder abgeschaltet.

Auch wird die Erfindung durch ein Verfahren zum Betreiben einer derartigen Brennkraftmaschine gelöst, bei der im Leerlaufbereich zumindest alle Gaseinlassventile aller Zylinder mit einer gleichen, steigenden Hubhöhe betrieben werden, dass im Übergangsbereich zwischen dem Leerlaufbereich und dem Teillastbereich die Gaseinlassventile einer Hälfte der Zylinder mit steigender Hubhöhe und die Gaseinlassventile der anderen Hälfte der Zylinder mit sich verringernder Hubhöhe betrieben werden, dass im Teillastbereich die Gaseinlassventile einer Hälfte der Zylinder mit steigender Hubhöhe und die Gaseinlassventile der anderen Hälfte der Zylinder mit Nullhub betrieben werden, dass im Übergangsbereich zwischen dem Teillastbereich und dem Volllastbereich die Gaseinlassventile einer Hälfte der Zylinder mit sich verringernder Hubhöhe und die Gaseinlassventile der anderen Hälfte der Zylinder mit sich steigender Hubhöhe betrieben werden und dass im Volllastbereich alle Gaseinlassventile aller Zylinder mit einer gleichen, steigenden Hubhöhe betrieben werden.

Die Erfindung wird nachfolgend anhand der Zeichnung näher erläutert, hierin zeigen:
Figur 1 eine schematische perspektivische Darstellung von zwei benachbarten Gaseinlassventilen, denen jeweils eine mechanisch steuerbare Ventiltriebanordnung zugeordnet ist,
Figur 2a eine Darstellung der Abhängigkeit des Radius der ersten und der zweiten Steuerkontur vom Verstellwinkel,
Figur 2b die aus Figur 2a abgeleitete erste und zweite Steuerkontur der Steuerwelle,
Figur 3 eine schematische Darstellung der Ventiltriebanordnung sowie der zugehörigen Diagramme im Leerlaufbereich,
Figur 4 eine schematische Anordnung der Ventiltriebanordnung sowie der Diagramme im Übergang vom Leerlauf- zum Teillastbereich,
Figur 5 eine schematische Darstellung der Ventiltriebanordnung sowie der zugehörigen Diagramme im Teillastbereich,
Figur 6 eine schematische Darstellung der Ventiltriebanordnung sowie der zugehörigen Diagramme im Übergangsbereich vom Teillast- zum Vollastbereich, und
Figur 7 eine schematische Anordnung der Ventiltriebanordnung sowie der zugehörigen Diagramme im Vollastbereich.

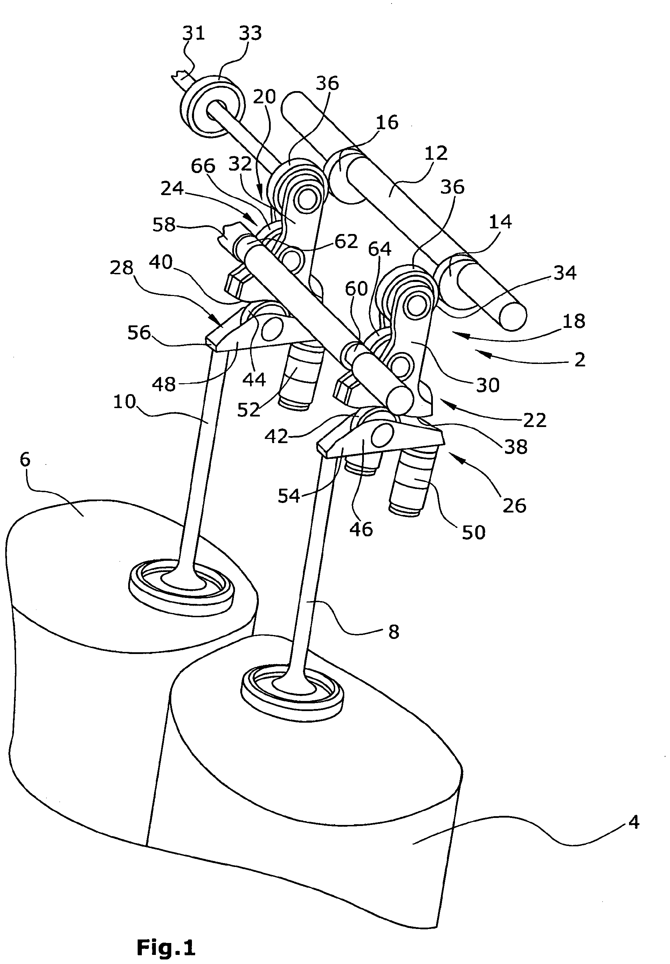

Figur 1 zeigt schematisch einen Ausschnitt einer mechanisch steuerbaren Ventiltriebanordnung 2, wobei im vorliegenden Fall zwei Zylinder 4, 6 dargestellt sind, die Gaseinlass- und Gasauslassventile aufweisen, wobei der Übersichtlichkeit halber in der Figur 1 jedoch jeweils nur ein Gaseinlassventil 8, 10 dargestellt ist.

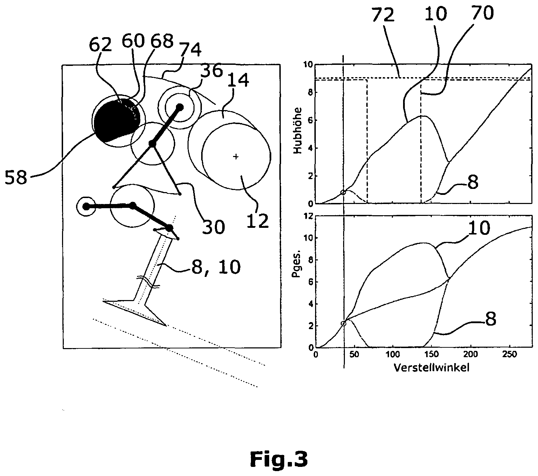

Des Weiteren ist eine Nockenwelle 12 mit Nocken 14, 16 gezeigt, die im vorliegenden Ausführungsbeispiel mit jeweils einer Übertragungsanordnung 18, 20 in Wirkverbindung stehen, um einen Ventilhub der Gaseinlassventile 8, 10 auszulösen. Der Übersichtlichkeit halber wurde bewusst auf bestimmte Teile der Ventiltriebanordnung, wie zum Beispiel Lagerungen, Kulisse, Federn verzichtet. Diese sind explizit in der DE 10 2004 003 327 beschrieben, die somit in den Offenbarungsgehalt der vorliegenden Anmeldung mit aufgenommen werden soll. Auch sind hier der besseren Nachvollziehbarkeit halber mit Hinblick auf die Figuren 3 bis 7 die Nocken 14, 16 gleich ausgerichtet, was sich vom Praxisfall unterscheiden kann.

Die Übertragungsanordnungen 18, 20 bestehen im vorliegenden Ausführungsbeispiel jeweils aus einer Zwischenhebelanordnung 22, 24 und einer Schwenkhebelanordnung 26, 28. Die Zwischenhebelanordnungen 22, 24 besitzen Zwischenhebel 30, 32 mit ersten Rollen 34, 36, die jeweils mit den Nocken 14, 16 der Nockenwelle 12 in Wirkverbindung stehen. Angedeutet ist hier eine Verbindungswelle 31, die zwei Zwischenhebel 32, die den entsprechenden Gaseinlassventilen 10 des Zylinders 6 zugeordnet sind, miteinander verbindet. Auf der Verbindungswelle 31 Ist eine Rolle 33 zur Führung in einer nicht dargestellten Kulisse vorgesehen. An dem den ersten Rollen 34, 36 entgegengesetzten Ende weist jeder Zwischenhebel 30, 32 eine Arbeitskurve 38, 40 auf, die wiederum jeweils mit einer Rolle 42, 44 der Schwenkhebelanordnungen 26, 28 in Wirkverbindung stehen. Die Rollen 42, 44 sind dabei jeweils in einem Schwenkhebel 46, 48 gelagert. Die Schwenkhebel 46, 48 sind wiederum an einer Seite in Lagerstellen 50, 52 gelagert und wirken mit der anderen Seite 54, 56 auf bekannte Weise auf die Gaseinlassventile 8, 10 ein. Um nun verschiedene Ventilhubpositionen der Gaseinlassventile 8, 10 einzustellen, ist eine Ventilhubverstelleinrichtung vorgesehen, von der hier nur die Steuerwelle 58 dargestellt ist. Die Steuerwelle 58 steht hierzu über Steuerkonturen 60, 62 in Wirkverbindung mit zweiten Rollen 64, 66 der Zwischenhebel 30, 32 in Wirkverbindung. Angedeutet ist in dieser Ansicht, dass die Steuerkontur 60 über ein bestimmtes Teilstück anders ausgeführt ist als die Steuerkontur 62.

Wie in den weiteren Figuren näher dargestellt und erläutert, führt nun ein Verdrehen der Steuerwelle 58 zu unterschiedlichen Maximalhüben der Gaseinlassventile 8, 10. Dadurch, dass die Steuerkonturen 60, 62 innerhalb eines Grundkreises der Steuerwelle 58 liegen, ist eine besonders einfache Lagerung der Steuerwelle möglich. In diesem Zusammenhang wird explizit auf die DE 10 2004 003 327 A1 verwiesen, wobei darauf hinzuweisen ist, dass eine Steuerwelle sowohl ein- als auch mehrteilig ausgeführt sein kann. Darüber hinaus kann die Steuerwelle 58 auch noch Endanschläge aufweisen, um eine Kalibrierung der nicht dargestellten Stellvorrichtung zu vereinfachen.

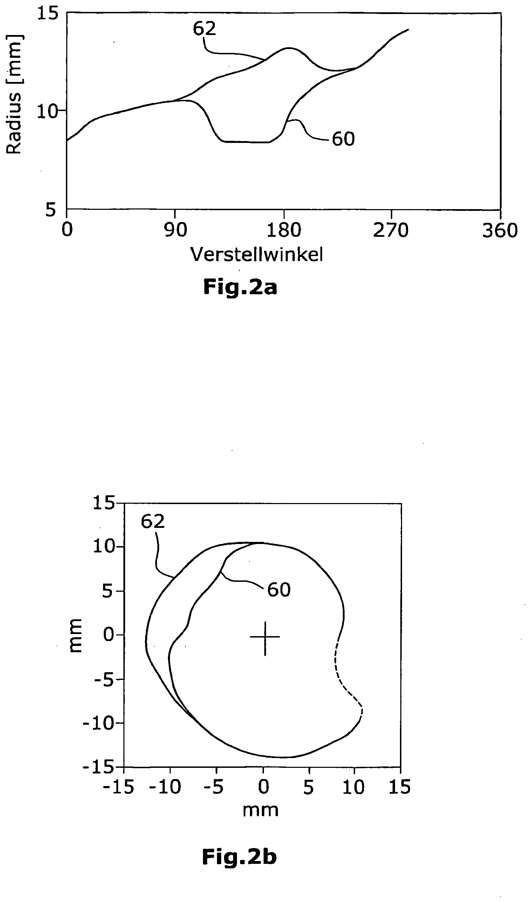

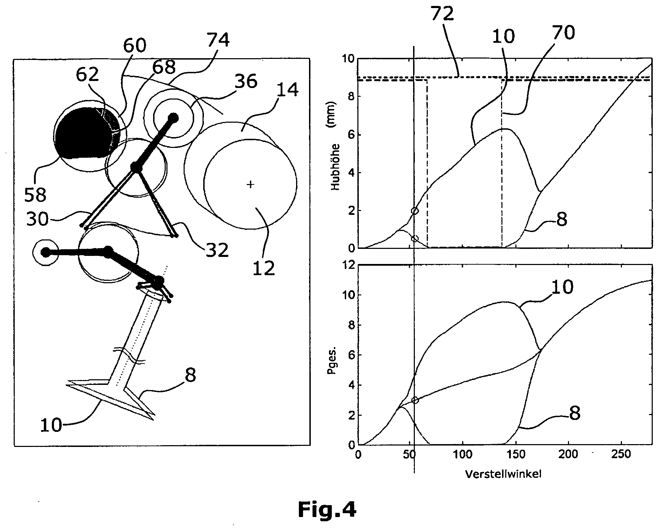

Im vorliegenden Ausführungsbeispiel wird davon ausgegangen, dass ein direktes Verhältnis zwischen dem Radius r der jeweiligen Steuerkontur 60, 62 und der Hubhöhe h des jeweiligen Gaseinlassventiles 8, 10 besteht. Der Hubhöhe h des jeweiligen Gaseinlassventils 8, 10 ist dann wiederum ein mittlerer Druck p im jeweiligen Zylinder 4, 6 zuzuordnen. Hierbei soll der Zylinder 4, dem Einlassventile 8 zugeordnet sind, deren Steuerkontur 60 ein gegenüber der Steuerkontur 62 zurückversetztes Teilstück 68 (siehe Figuren 4 bis 7) aufweist, als Abschaltzylinder ausgeführt sein. Um nun zu verhindern, dass in den Übergangsbereichen zur Abschaltung oder Aktivierung des Abschaltzylinders ungewünschte Lastsprünge entstehen, ist eine Voraussetzung, dass der mittlere Druck p_{ges} der Brennkraftmaschine, also aller Zylinder, im Wesentlichen monoton ansteigend über den positiven Verstellwinkel der Steuerwelle 58 bzw. über eine zunehmende Last verläuft. Aus diesen Voraussetzungen lässt sich dann zunächst das Bild der Figur 2a ableiten, bei dem der Radius r der jeweiligen Steuerkontur 60, 62 über dem Verstellwinkel der Steuerwinkel 58 aufgetragen ist. Hieraus lassen sich dann gemäß Figur 2b die Steuerkonturen 60, 62 direkt ableiten. Eine Ausführung der Steuerwelle 58 in der Serienfertigung kann natürlich von dieser mathematischen Ableitung abweichen.

Die Figuren 3 bis 7 zeigen nun in schematischer Weise die Ventiltriebanordnung 2 mit den Hubhöhen der jeweiligen Gaseinlassventile 8, 10 und den Positionen in den zugehörigen Diagrammen, wobei das obere Diagramm jeweils die Hubhöhe des jeweiligen Ventils 8, 10 über dem Verstellwinkel der Steuerwelle 58 und das untere Diagramm den mittleren Druck im jeweiligen Zylinder 4, 6 sowie den Verlauf des mittleren Gesamtdruckes p_{ges} über dem Verstellwinkel der Steuerwelle 58 darstellt.

Figur 3 zeigt als Ausgangsstellung die Situation der Brennkraftmaschine im Leerlaufbereich. Der benötigte Gesamtdruck p_{ges} ist sehr gering, hier im Bereich von ca. 2 bar. Dies entspricht einer Hubhöhe aller Gaseinlassventile, auch die des Abschaltzylinders, von ca. 0,75 mm. Die Auslassventile, hier gekennzeichnet durch die Linien 70, 72, öffnen beide noch gemäß dem Arbeitstakt. Deutlich zu erkennen ist die Position der Steuerwelle 58, wobei der Radius des Angriffspunktes der ersten Steuerkontur 60 r₁ gleich der zweiten Steuerkontur 62 r₂ ist. Bei steigender Lastanforderung, also im Übergangsbereich zwischen dem Leerlaufbereich und dem Teillastbereich, wird der Hub-Mitteldruck des ersten Zylinders 4 abgesenkt und des zweiten Zylinders 6 angehoben. Dies ist in Figur 4 dargestellt. Beide Auslassventile öffnen noch gemäß dem Arbeitstakt. Auch deutlich zu erkennen ist hier, dass nun die Steuerkontur 60 mit einem gegenüber der Steuerkontur 62 zurückversetzten Teilbereich 68 auf die Zwischenhebelanordnung 22 angreift,

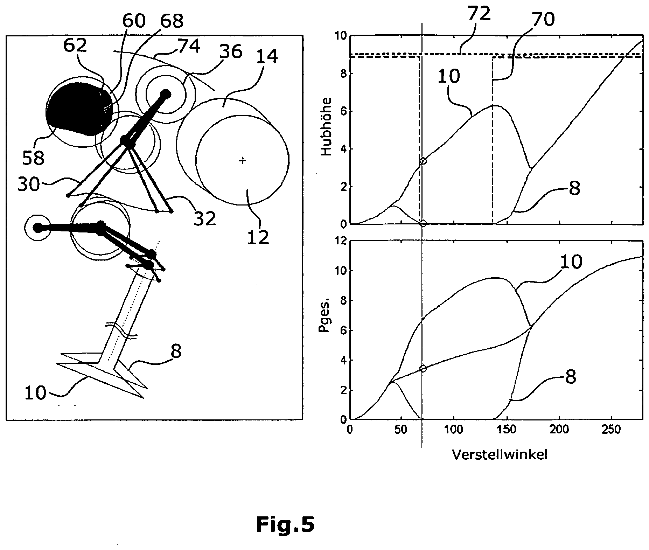

In Figur 5 ist nun dargestellt, wie bei weiter steigender Lastanforderung die Einlassventile 8 des ersten Zylinders 4 geschlossen bleiben. Auch die zugeordneten Auslassventile bleiben gemäß der Linie 70 geschlossen. Die zweite Zylindergruppe 6 wird bei hohen, wirkungsgradgünstigen Lasten derart betrieben, dass ein über alle Zylinder 4, 6 Im Wesentlichen linear ansteigender Druckverlauf p_{ges} realisiert wird.

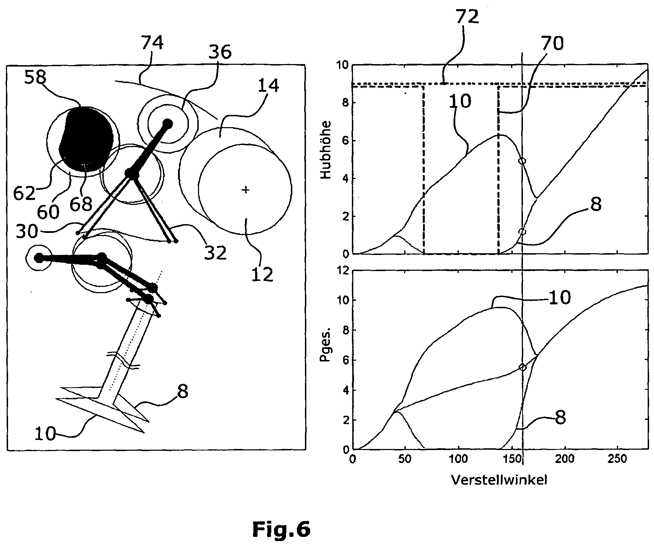

Figur 6 zeigt nun die Situation im Übergangsbereich zwischen dem Teillastbereich und dem Volllastbereich. Eine weitere Lastanforderung kann hier nur noch durch Reaktivierung der ersten Zylindergruppe 8 dargestellt werden. Um einen weiterhin monotonen Verlauf des Motormomentes darzustellen, wird dementsprechend die Last der zweiten Zylinder 10 reduziert.

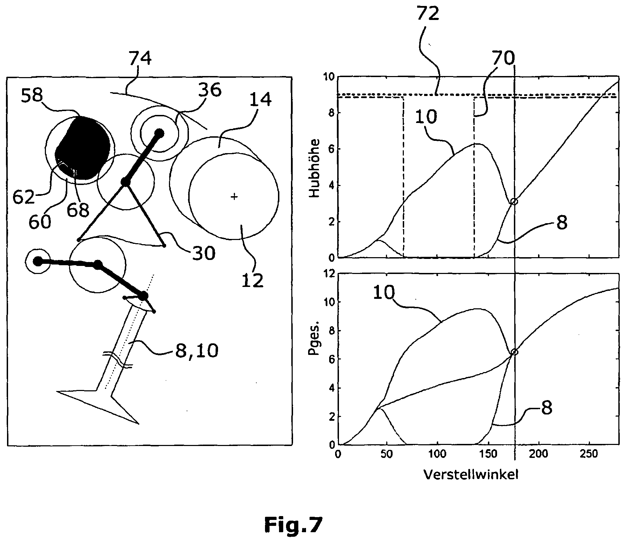

In Figur 7 ist die Situation im Vollastbereich dargestellt. Beide Steuerkonturen 60, 62 greifen nun wieder mit demselben Radius auf das jeweilige Angriffsorgan 64, 66 des Zwischenhebels 30, 32 an.

## Patentansprüche

1. Mechanisch steuerbare Ventiltriebanordnung für eine Brennkraftmaschine mit mindestens zwei Zylindern (4, 6), die jeweils mindestens ein Gaseinlassventil (8, 10) und mindestens ein Gasauslassventil aufweisen, wobei mindestens eine Übertragungsanordnung (18, 20) vorgesehen ist, derart, dass zumindest jedem Gaseinlassventil (8, 10) eine Zwischenhebelanordnung (22, 24) und eine Schwenkhebelanordnung (26, 28) zugeordnet ist, wobei ein Zwischenhebel (30, 32) der Zwischenhebelanordnung (22, 24) eine Arbeitskurve (38, 40) zur Wirkverbindung mit einem Schwenkhebel (46, 48) der Schwenkhebelanordnung (26, 28) aufweist, wobei der Zwischenhebel (30, 32) in Wirkverbindung mit einer Umfangskontur (14, 16) einer Nockenwelle (12) steht und wobei die Zwischenhebelanordnung (22, 24) ein Angriffsorgan (64, 66) aufweist, das mit einer Steuerkontur (60, 62) einer Ventilhubverstelleinrichtung (58) in Wirkverbindung steht, derart, dass verschiedene Ventilhubpositionen einstellbar sind und eine Nullhubeinstellung der Gaseinlassventile (8) mindestens eines Abschalt-Zylinders (4) möglich ist, wobei die Ventilhubverstelleinrichtung (58) eine Steuerwelle aufweist, auf der die Steuerkonturen (60, 62) angeordnet sind, wobei alle Steuerkonturen (60, 62) für einen Leerlaufbereich und einen Volllastbereich im Wesentlichen gleich ausgebildet sind, wobei die Steuerkonturen für einen Teillastbereich der Gaseinlassventile (8) des Abschaltzylinders (4) ein unterschiedlich ausgeführtes Teilstück (68) gegenüber der Steuerkontur (62) für einen Lastbereich der Gaseinlassventile (10) der übrigen Zylinder (6) aufweisen, wobei ein direktes Verhältnis zwischen dem Radius r der jeweiligen Steuerkontur (60, 62) und der Hubhöhe h des Gaseinlassventils (8, 10) besteht, **dadurch gekennzeichnet, dass** der Hubhöhe h der Gaseinlassventile (8, 10) eines Zylinders (4, 6) ein mittlerer Druck p im Zylinder (4, 6) zugeordnet ist, wobei der Radius r₁ der ersten Steuerkontur (60) derart in Abhängigkeit vom Radius r₂ der zweiten Steuerkontur (62) gewählt ist, dass im Teillastbereich der Brennkraftmaschine der Druckverlauf p_{ges} über alle Zylinder (4, 6) der Brennkraftmaschine monoton ansteigend über den Verstellwinkel der Steuerwelle (58) verläuft.

2. Mechanisch steuerbare Ventiltriebanordnung nach Anspruch 1, **dadurch gekennzeichnet, dass** die Steuerkonturen (60, 62) innerhalb eines Grundkreises der Steuerwelle (58) angeordnet sind.

3. Mechanisch steuerbare Ventiltriebanordnung nach Anspruch 1 oder 2, **dadurch gekennzeichnet, dass** die Steuerwelle (58) Endanschläge aufweist.

4. Mechanisch steuerbare Ventiltriebanordnung nach Anspruch 1 oder 2, **dadurch gekennzeichnet, dass** das Teilstück (68) der dem Abschaltzylinder (4) zugeordneten Steuerkontur (60) gegenüber dem entsprechenden Teilstück der den übrigen Zylindern zugeordneten Steuerkontur (62) zurückversetzt angeordnet ist.

5. Mechanisch steuerbare Ventiltriebanordnung nach einem der Ansprüche 1 - 4, **dadurch gekennzeichnet, dass** zwei Zwischenhebel (30, 32) über eine Verbindungswelle an dem der Arbeitskurve (38, 40) entgegengesetzten Ende miteinander verbunden sind, wobei erste Rollen für die Kraftübertragung der Nockenwelle (12) vorgesehen sind und eine zweite Rolle zwischen den Zwischenhebeln (30, 32) zur Führung in einer Kulisse vorgesehen ist.

6. Brennkraftmaschine mit einer mechanisch steuerbaren Ventiltriebanordnung nach einem der Ansprüche 1 - 5, **dadurch gekennzeichnet, dass** im Teillastbereich eine Hälfte der Zylinder (4, 6) abgeschaltet ist.

7. Verfahren zum Betreiben einer Brennkraftmaschine nach einem der vorhergehenden Ansprüche, **dadurch gekennzeichnet, dass** in Richtung eines ansteigenden Drehmomentes im Leerlaufbereich zumindest alle Gaseinlassventile (8, 10) aller Zylinder (4, 6) mit einer gleichen, steigenden Hubhöhe betrieben werden, dass im Übergangsbereich zwischen dem Leerlaufbereich und dem Teillastbereich die Gaseinlassventile (10) einer Hälfte der Zylinder (6) mit steigender Hubhöhe und die Gaseinlassventile (8) der anderen Hälfte der Zylinder (4) mit sich verringernder Hubhöhe betrieben werden, dass im Teillastbereich die Gaseinlassventile (10) einer Hälfte der Zylinder (6) mit steigender Hubhöhe und die Gaseinlassventile (8) der anderen Hälfte der Zylinder (4) mit Nullhub betrieben werden, dass im Übergangsbereich zwischen dem Teillastbereich und dem Volllastbereich die Gaseinlassventile (10) einer Hälfte der Zylinder (6) mit sich verringernder Hubhöhe und die Gaseinlassventile (8) der anderen Hälfte der Zylinder (4) mit sich steigender Hubhöhe betrieben werden und dass im Volllastbereich alle Gaseinlassventile (8, 10) aller Zylinder (4, 6) mit einer gleichen, steigenden Hubhöhe betrieben werden.

## Claims

1. A mechanically controllable valve train assembly for an internal combustion engine comprising at least two cylinders (4, 6), each of the cylinders comprising at least one gas inlet valve (8, 10) and at least one gas outlet valve, at least one transmission arrangement being provided such that one intermediate lever arrangement (22, 24) and one swivel lever arrangement (26, 28) are associated to at least each gas inlet valve (8, 10), wherein an intermediate lever (30, 32) of the intermediate lever arrangement (22, 24) comprises a working curve (38, 40) for operative connection with a swivel lever (46, 48) of the swivel lever arrangement (26, 28), wherein the intermediate lever (30, 32) is in operative connection with a peripheral structure (14, 16) of a camshaft (12), and wherein the intermediate lever arrangement (22, 24) comprises an engagement element (64, 66) that is in operative connection with a control contour (60, 62) of a valve stroke adjusting device (58) such that different valve strokes are adjustable and a zero stroke adjustment of the gas inlet valves (8) of at least one shut-off cylinder (4) is possible, wherein the valve stroke adjusting device (58) comprises a control shaft on which the control contours (60, 62) are arranged, wherein all control contours (60, 62) for an idle range and a full-load range are substantially identical in design, wherein the control contours for a part-load range of the gas inlet valves (8) of the shut-off cylinder (4) comprise a section (68) designed differently with respect to the control contour (62) for a part-load range of the gas inlet valves (10) of the remaining cylinders (6), wherein a direct ratio exists between the radius r of a respective control contour (60, 62) and the stroke height h of the at least one gas inlet valve (8, 10),
**characterized in that**
the stroke height h of the gas inlet valves (8, 10) of a cylinder (4, 6) has an average pressure p within the cylinder (4, 6) assigned thereto, wherein the radius r₁ of the first control contour (60) is selected dependent on the radius r₂ of the second control contour (62) so that, in the part-load range of the internal combustion engine, a pressure development p_{ges} across each of the cylinders (4, 6) monotonously increases over an adjustment angle of the control shaft (58).

2. The mechanically controllable valve train assembly as recited in claim 1, **characterized in that** the control contours (60, 62) are arranged within a basic circle of the control shaft (58).

3. The mechanically controllable valve train assembly as recited in claim 1 or 2, wherein the control shaft (58) further comprises end abutments.

4. The mechanically controllable valve train assembly as recited in claim 1 or 2, **characterized in that** the section (68) of the control contour (60) assigned to the shut-off cylinder (4) is set back relative to a corresponding section of the control contour (68) assigned to the remaining cylinders.

5. The mechanically controllable valve train assembly as recited in one of claims 1 - 4, **characterized in that** a connection shaft connects two intermediate levers (30, 32) are connected with each other at an end opposite to the working curve (38, 40), wherein first rolls are provided for the force transmission of the camshaft (12) and a second roll is provided between the intermediate levers (30, 32) to be guided in a sliding guide.

6. The mechanically controllable valve train assembly as recited in one of claims 1 - 5, **characterized in that** one half of the cylinders (4, 6) is switched off in the part-load range.

7. A method for operating the internal combustion engine as recited in one of the preceding claims, **characterized in that** in a direction of an increasing moment of rotation, in an idle range, each of gas inlet valves (8, 10) of all cylinders (4, 6) is operated with an identical, increasing stroke height, that in a transition range between the idle range and the part-load range, the gas inlet valves (10) of half of the cylinders (6) are operated with an increasing stroke height, and the gas inlet valves (8) of the other half of the cylinders (4) are operated with a decreasing stroke height, that in the part-load range, the gas inlet valves (10) of one half of the cylinders (6) are operated with an increasing stroke height, and the gas inlet valves (8) of the other half of the cylinders (4) are operated with a zero-stroke, that in the transition range between the part-load range and the full-load range, the gas inlet valves (10) of one half of the cylinders (6) are operated with a decreasing stroke height and the gas inlet valves (8) of the other half of the cylinders (4) are operated with an increasing stroke height, and that in the full-load range, each of the gas inlet valves (8, 10) of the cylinders (4, 6) are operated with an identical, increasing stroke height.

## Revendications

1. Ensemble de commande de soupape mécanique pour un moteur à combustion interne avec aux moins deux cylindres (4, 6), chaque cylindre comprenant au moins une soupape d'admission des gaz (8, 10) et au moins une soupape de sortie des gaz, au moins un ensemble de transmission (18, 20) étant prévu de sorte qu'un ensemble de leviers intermédiaires (22, 24) et un ensemble de leviers pivotants (26, 28) sont associés à au moins chaque soupape d'admission des gaz (8, 10), un levier intermédiaire (30, 32) dudit ensemble de leviers intermédiaires (22, 24) comprend une courbure de travail (38, 40) pour la liaison fonctionnelle avec un levier pivotant (46, 48) dudit ensemble leviers pivotants (26, 28), le levier intermédiaire (30, 32) étant en liaison fonctionnelle avec un contour périphérique (14, 16) d'un arbre à cames (12), et ledit ensemble de leviers pivotants (26, 28) comprenant un élément d'engagement (64, 66) en liaison fonctionnelle avec un contour de commande (60, 62) d'un moyen d'ajustage de la levée de soupape (58) de sorte que différentes position de levée de soupape peuvent être ajustées et un ajustage de zéro levée des soupapes d'admission des gaz (8) est possible, le moyen d'ajustage de la levée de soupape (58) comprenant un arbre de commande su lequel les contours de commande (60, 62) sont disposés, tous les contours de commande (60, 62) pour une plage de ralenti et une plage de pleine charge sont réalisés de manière sensiblement identique, les contours de commande pour une plage de charge partielle des soupapes d'admission des gaz (8) du cylindre de coupure (4) comprenant une section (68) réalisée de manière différente par rapport au contour de commande (62) pour une plage de charge des soupapes d'admission des gaz (10) du reste des cylindres (6), un rapport direct existant entre le radius r du contour de commande (60, 62) respectif et la hauteur de levée h de la soupape d'admission des gaz (8, 10), **caractérisé en ce qu'**une pression p moyenne dans le cylindre (4, 6) est associée à la hauteur de levée h de la soupape d'admission des gaz (8, 10) d'un cylindre (4, 6), le radius r₁ du premier contour de commande (60) étant choisi en fonction du radius r₂ du deuxième contour de commande (62) de sorte que, dans la plage de charge partielle du moteur à combustion interne, la courbe de pression p_{ges} sur tous les cylindres (4, 6) du moteur à combustion interne est croissante de manière monotone par l'angle d'ajustage de l'arbre de commande (58).

2. Ensemble de commande de soupape mécanique selon la revendication 1, **caractérisé en ce que** les contours de commande (60, 62) sont disposés dans un cercle de base de l'arbre de commande (58).

3. Ensemble de commande de soupape mécanique selon la revendication 1 ou 2, **caractérisé en ce que** l'arbre de commande (58) a des butées de fin de course.

4. Ensemble de commande de soupape mécanique selon la revendication 1 ou 2, **caractérisé en ce que** la section (68) du contour de commande (60) associé au cylindre de coupure (4) est disposée en retrait par rapport à la section correspondante du contour de commande (62) associé au reste des cylindres.

5. Ensemble de commande de soupape mécanique selon l'une quelconque des revendications 1 - 4, **caractérisé en ce que** deux leviers intermédiaires (30, 32) sont reliés l'un à l'autre par un arbre de liaison à l'extrémité opposée à la courbure de travail (38, 40), des premiers rouleaux étant prévus pour la transmission de force de l'arbre à cames (12) et un deuxième rouleau est prévu entre les leviers intermédiaires (30, 32) pour guidage dans une coulisse.

6. Ensemble de commande de soupape mécanique selon l'une quelconque des revendications 1 - 5, **caractérisé en ce que** dans la plage de charge partielle la moitié des cylindres (4, 6) est désactivée.

7. Procédé d'opération d'un moteur à combustion interne selon l'une quelconque des revendications précédentes, **caractérisé en ce que**, dans la direction d'un couple croissant, dans une plage de ralenti, au moins toutes les soupapes d'admission des gaz (8, 10) de tous les cylindres (4, 6) sont opérées avec une hauteur de levée croissante identique, que, dans la plage de transition entre la plage de ralenti et la plage de charge partielle, les soupapes d'admission des gaz (10) d'une moitié des cylindres (6) sont opérées avec la hauteur de levée croissante et les soupapes d'admission des gaz (8) de l'autre moitié des cylindres (4) sont opérées avec la hauteur de levée décroissante, que, dans la plage de charge partielle, les soupapes d'admission des gaz (10) d'une moitié des cylindres (6) sont opérées avec la hauteur de levée croissante et les soupapes d'admission des gaz (8) de l'autre moitié des cylindres (4) sont opérées avec zéro levée, que, dans la plage de transition entre la plage de ralenti et la plage de pleine charge, les soupapes d'admission des gaz (10) d'une moitié des cylindres (6) sont opérées avec la hauteur de levée décroissante et les soupapes d'admission des gaz (8) de l'autre moitié des cylindres (4) sont opérées avec la hauteur de levée croissante, et que, dans la plage de pleine charge, toutes les soupapes d'admission des gaz (8, 10) de tous les cylindres (4, 6) sont opérées avec la même hauteur de levée croissante.
